Europäisches Patentamt

European Patent Office

Office européen des brevets

(19)

(11) Publication number: **0 459 824 A2**

# EUROPEAN PATENT APPLICATION

(12)

(21) Application number: **91304949.0**

(22) Date of filing: **31.05.91**

(51) Int. Cl.⁵: **H04Q 7/04, H04B 7/26**

(30) Priority: **01.06.90 GB 9012313**
**20.07.90 GB 9015937**

(43) Date of publication of application:
**04.12.91 Bulletin 91/49**

(84) Designated Contracting States:
**AT BE CH DE DK ES FR GR IT LI LU NL SE**

(71) Applicant: **RACAL-VODAFONE LIMITED**
**Western Road**
**Bracknell, Berkshire (GB)**

(72) Inventor: **McCombe, Michael J.**
**1 Tyne Way, Thatcham**
**Newbury, Berkshire, RG13 3DS (GB)**

(74) Representative: **Foster, David Martyn et al**
**MATHISEN MACARA & CO. The Coach House**
**6-8 Swakeleys Road**
**Ickenham Uxbridge UB10 8BZ (GB)**

(54) **Telecommunications network.**

(57) A cellular telephone network provides cells P1, P2, P3.. in the normal way, each cell having a predetermined total number of available radio channels. The network serves the subscribers of more than one subscriber system. For example, it serves both GSM and PCN subscribers. In order to prevent subscribers from one of the systems using all the available channels in any cell at any time, thus blocking out the other system completely, the base station controller in each cell limits to a respective predetermined maximum the number of channels which can be used at any time by the subscribers of each system. Thus, X channels can be allocated to GSM subscribers and Y channels to PCN subscribers. (X+Y) can be greater than N where N is the maximum number of channels available in each cell, though both X and Y are less than N.

EP 0 459 824 A2

Fig. 3.

The invention relates to telecommunications networks by means of which a plurality of subscribers may communicate with each other. Embodiments of the invention to be described relate to telecommunications networks in the form of telephone networks and more especially to such networks involving mobiles (such as in a cellular network) which can communicate with each other and with fixed telephones. However, the invention may be applied to any other type of telecommunications network.

According to the invention, there is provided a telecommunications network serving a predetermined plurality of different systems of subscribers, the network having a predetermined plurality of interconnection channels by means of which the subscribers can communicate with each other, and control means limiting to a predetermined maximum the number of interconnection channels which can be used at any time by the subscribers of each system.

According to the invention, there is further provided a cellular telephone network for serving the subscribers of at least two separate subscriber systems, each cell of the network having a predetermined total number of available channels each of which can be used by a subscriber to both or all of the subscriber systems, and including means for each cell for restricting the number of radio channels therein which can be used at any time by the subscribers of each of the systems such that at no time can the subscribers of one system use all the available radio channels in any particular cell.

Telecomunications networks embodying the invention will now be described, by way of example only, with reference to the accompanying diagrammatic drawings in which:

Figure 1 is a diagrammatic drawing of one of the networks;

Figure 2 is a block diagram for explaining the operation of the network of Figure 1;

Figure 3 is a diagrammatic drawing of another of the networks; and

Figure 4 is a diagram for explaining operation of the network of Figure 3.

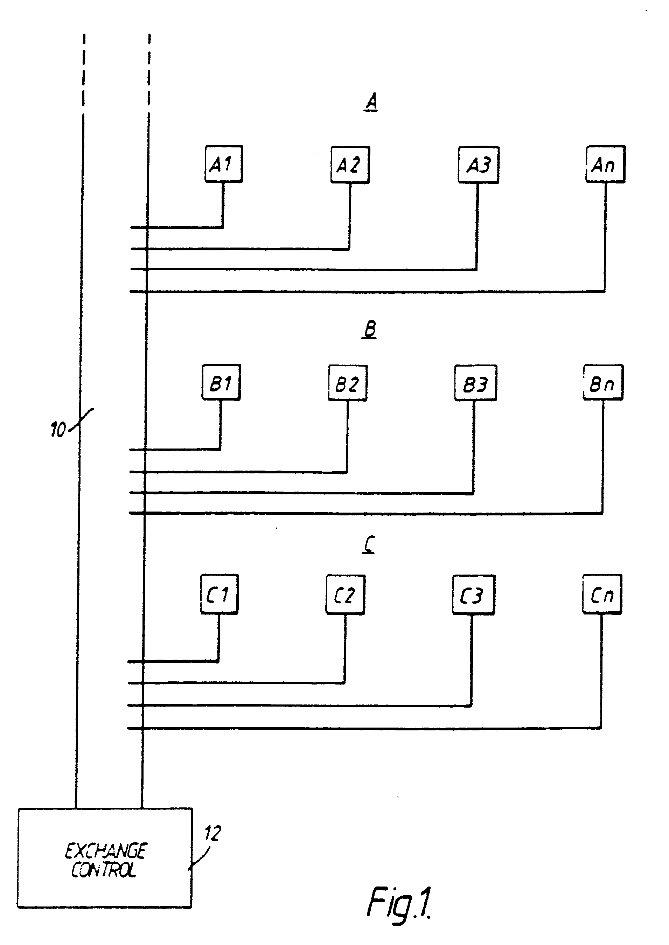

Figure 1 illustrates a somewhat generalised example of a network embodying the invention. As illustrated, the network serves a number of different subscribers. In the example illustrated, there are three separate subscriber systems and each subscriber subscribes to one of the systems. Thus, subscribers A1,A2,A3...An subscribe to system A, while subscribers B1,B2,B3....Bn subscribe to system B and subscribers C1,C2,C3.....Cn subscribe to system C. The systems may differ from each other in, for example, the type or quality of the service offered or the geographical area covered, or may be basically similar but providing competing services. However, all three systems use the same telecommunications network which is generally illustrated as a group 10 of channels which are controlled by an exchange control 12. Each of the subscribers in the systems A,B and C is connected into the group of channels 10 by a respective link, as illustrated. These links may be wire links or wireless links such as radio links, and the group of channels 10 may be wired or wireless channels or a combination of such channels.

There may be only two systems involved, instead of the three systems A,B and C illustrated, or more than three.

The network 10 may be arranged such that each subscriber in a particular system can only communicate, via the network, with other subscribers in his own system, or he may be able to communicate with subscribers in all, or perhaps only some, of the other systems.

The network 10 will in principle only have available a fixed number of intercomunication channels by which it can connect one subscriber to another. The network therefore incorporates means to prevent all available intercommunication channels being used at any one time by the subscribers of just one of the systems; if that were to happen, the subscribers of the other systems would be completely prevented from making calls.

Thus, in the example being considered, where there are three systems A,B and C using the network 10, the number of channels which could be used by system A subscribers at any time would be X, the number of channels which could be used at any time by system B subscribers B would be Y, and the number of interconnection channels which could be used at any time by system C subscribers would be Z. X+Y+Z could be more than N, where N is the total number of interconnection channels available in the network. However, advantageously (X+Y), (X+Z) and (Y+Z) are each less than N, so that no two systems can use all the available interconnection channels and thus completely block the third system. For example, if there are twelve interconnection channels in the network (N = 12), X could be 4, Y could be 5 and Z could 3.

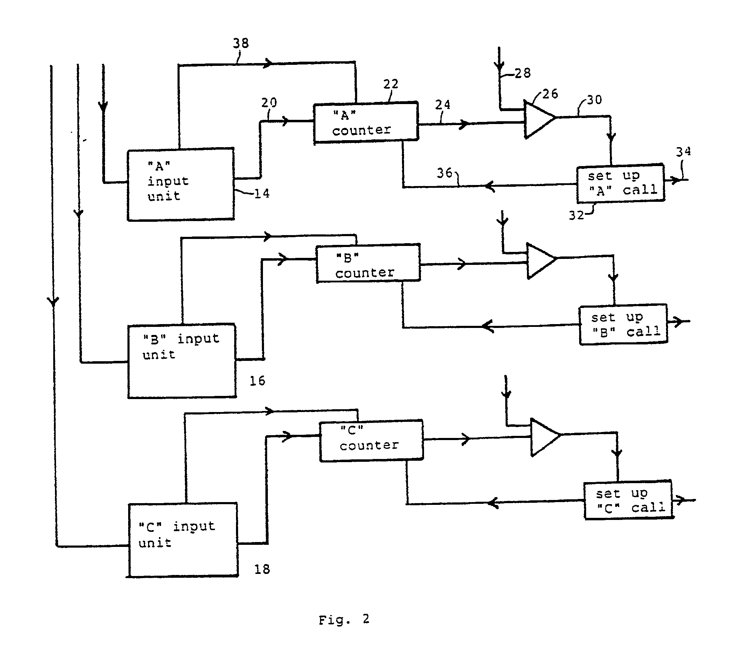

Figure 2 illustrates in block diagram form the operations carried out by the exchange control 12. Requests from subscribers to system A for calls are received by an "A" input unit 14, while similar requests from subscribers to system B are received by a "B" input unit 16 and from subscribers to network C by a "C" input unit 18.

In response to a request for a call to be set up by a subscriber to system A, unit 14 sends a "read" signal on a line 20 to an "A" counter 22 which records the number of calls currently being made by subscribers to system A. This causes the counter to read out its count on a line 24 to a comparator 26 where the count value is compared with the limit X which is input on a line 28. If the count value on line 24 is not more than the limit X on line 28, the comparator signals accordingly on a line 30 to a call setting up unit 32 which produces the required signals on a line 34 to permit the call to be set up to the called subscriber in the conventional way (assuming a channel is available). At the same time, the unit 32 increments the counter 22 by a signal on a line 36. When the call is completed, the unit 14 decrements the counter 22 by a signal on a line 38.

Corresponding counters, comparators and call setting up units are provided, as shown in Figure 2, for the subscribers to systems B and C and are connected in the manner shown and controlled in the manner just described for the system A subscribers.

Figure 2 is intended to be illustrative of the operations carried out by the exchange control which could alternatively be implemented partly or substantially wholly by software.

The exchange control 12 can be arranged to maintain a record of the number of calls made by the subscribers in each system, to enable the values of X,Y and Z to be varied to maintain optimum values. X,Y and Z can be varied from time to time in accordance with certain criteria such as an increase or decrease in the number of subscribers on a particular one of the systems, time of day or time of week (if, for example, one of the systems was used primarily by businesses while others were used primarily by residential users, it could be appropriate to vary X,Y and Z according to the time of day and the time of week).

The network 10 could be or include a PSTN. The systems A,B,C could be of any suitable type. For example, they could be different types of mobile radio systems such as cellular systems. One could be the planned pan-European digital telephone system (GSM) and the others could be personal communication networks (PCN's) operated by different operators (In a PCN system, mobiles specially designed for portable personal use are utilised, rather than mobiles primarily designed for vehicular use; such PCN mobiles may be of smaller size and lower power than GSM mobiles, for example.) All three systems A,B,C could be PCN's. However, many other arrangements are possible.

A more detailed example will now be considered.

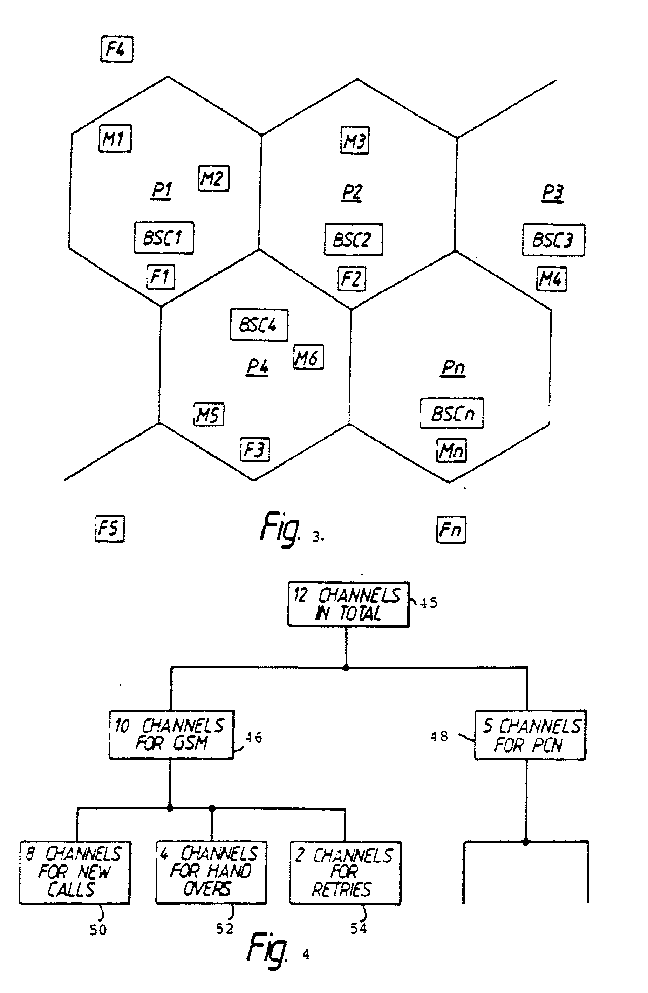

Figure 3 shows a cellular telephone network in diagrammatic form. The network provides geographical areas or "cells" P1,P2... Pn each served by a respective radio transmitter/receiver and controlled by a respective base station controller BSC1, BSC-2...BSCn. Mobiles M1,M2...Mn moving within and between the cells can communicate with each other and with fixed telephones F1,F2...Fn in a PSTN in known manner by radio communication with the radio transmitter/receiver of the cell in which they are located, under control of the relevant base station controller. Thence they can communicate by radio link to a mobile in the same cell or via landline and corresponding radio link to a mobile in another cell (under control of its base station controller) or by landline to the PSTN and one of the fixed telephones.

The geographical extent of each cell p1, P2...Pn is dependent on the geographical conditions, and the characteristics of the radio transmitter/receiver in each cell and of the mobile and other factors. In practice, the cells will be of irregular and varying shape rather than the regular arrangement shown and the cells may well overlap.

Within each cell, a predetermined plurality of radio channels is available for use for calls, the cellular arrangement enabling frequencies to be re-used within the network provided that the power and geographical separation between re-used frequencies is such as to prevent interference.

As so far described, the cellular network is conventional. However, it will now be assumed that it serves subscribers to two different subscriber systems. For example, it will be assumed that it serves subscribers both to the planned pan-European digital telephone (GSM) and to a PCN.

Because each cell has available to it only a certain number of radio channels, it is necessary to ensure that neither one of the two systems (GSM and PCN in this example) can at any time use so many of the available channels in any cell that effective use of the cell by the other system is blocked. In order to prevent this, in each cell the number of radio channels which may be used by each of the GSM and PCN systems is fixed. Thus, for example, up to X channels at any time may be used by PCN traffic and up to Y channels at any time may be used by GSM traffic. (X+Y) can be greater than or equal to N, where N is the total number of channels available in any particular cell. In this way, therefore, neither of the systems can use all the channels available in a particular cell.

When a call is to be set up, a channel will be allocated to the call, provided that the number of allocated channels in the cell will not exceed the maximum allowable number of channels (X or Y) for the particular system (PCN or GSM). The operations involved for carrying out this process can be similar to those described above with reference to Figure 2.

If a call cannot be accepted in a cell, because the maximum number of channels for the system (PCN or GSM) in which that call originates has already been allocated, the call may be handed over to an adjacent cell which may be able to accept the call. Such handover may be possible because of overlap between adjacent cells.

In each particular system (PCN or GSM in this example), a call involving a mobile moving out of one cell into another may be handed over to that other cell in known manner. In the arrangement being described, however, the new cell would only accept the handed-over call if the maximum number of channels available in that new cell for calls from the particular system involved (PCN or GSM in this example) would not be exceeded.

Bids (for acceptance of calls) which are blocked because of the restriction on the number of channels available to the particular system (GSM or PCN) in the cell are treated as congestion, and re-bids may be made on adjacent cells ("directed re-try"). Any such re-bids are of course subject in the adjacent cells to the channel availability limits applying to the new cell.

The allocation of available channels may be made on a hierarchical basis as illustrated in Figure 4. Thus, in any particular cell there may be (say) twelve channels available in total, as indicated in block 45. The maximum number of channels which can be used by GSM traffic may, for example, be ten as indicated in block 46 (that is, Y = 10). Similarly, the maximum number of channels which may be used by PCN traffic may be 5, as indicated by block 48; that is, X = 5.

As shown in Figure 4, the maximum number (10) of channels allocated to GSM traffic may be further specified. Thus, for example, a maximum of 8 channels may be available for new calls, as indicated by box 50 in Figure 4. The maximum number of channels available for calls handed-over from adjacent cells might be specified as 4, as indicated by box 52. The maximum number of channels available for re-tries might be specified as 2, as indicated by box 54. The channels available for PCN traffic could be further specified in the same way. The channel allocations can be designed to keep the level of congestion in the individual systems (e.g. GSM and PCN in the example being considered) below predetermined thresholds, such as below 2% for GSM and below 10% for PCN. To assist in the maintenance of proper operation, the base station controller for each cell makes separate measurements of the traffic on the various systems in that cell.

Clearly, the network must be able to distinguish calls from the various systems (e.g. GSM and PCN). GSM and PCN traffic can be distinguished by the fact that GSM has a station class mark less than 4 whereas PCN has a station class mark greater than 4.

Although the arrangements described with reference to Figures 3 and 4 envisages two subscriber systems served by the same cellular network, other arrangements may involve three or more different subscriber systems served by the network. Each such system would be able to use not more than a particular maximum number of channels in each cell, each maximum number being selected to prevent any one subscriber system using all the available channels in any one cell.

**Claims**

1. A telecommunications network having a predetermined plurality of interconnection channels by means of which subscribers can communicate with each other, characterised in that the network serves a predetermined plurality of different systems (e.g. A,B,C) and by control means (12;15,16,18) limiting to a predetermined maximum the number of interconnection channels which can be used at any time by the subscribers of each system.

2. A network according to claim 1, characterised in that each predetermined maximum differs in number from at least one other predetermined maximum.

3. A network according to claim 1 or 2, characterised in that the total of all the predetermined maximums exceeds the total number of available interconnection channels.

4. A network according to any preceding claim, characterised in that the predetermined maximums are selected such that at no time can all the interconnection channels be occupied by subscribers from less than the total number of systems.

5. A network according to any preceding claim, characterised in that at least part of at least some of the channels are radio channels.

6. A network according to claim 5, characterised in that it is partly cellular.

7. A cellular telephone network each cell of which has a predetermined total number of available channels, characterised in that it is arranged to serve the subscribers of at least two separate subscriber systems, and in that each channel can be used by a subscriber to both or all of the subscriber systems, and by means for each cell for restricting the number of radio channels therein which can be used at any time by the subscribers of each of the systems such that at no time can the subscribers of one system use all the available radio channels in any particular cell.

8. A network according to claim 7, characterised in that in any particular cell the sum of the predetermined maximums exceeds the total number of channels available in that network.

9. A network according to claim 7 or 8, characterised by means for each cell for limiting to a predetermined respective maximum number the number of radio channels which can be used for a respective type of call by the subscribers of any one system.

10. A network according to claim 9, characterised in that in each cell the total of the respective maximum numbers for the different call types for subscribers on a particular one of the systems exceeds the predetermined maximum number of channels available in that cell for that system.

Fig.1.

Fig. 2

F4

M1

M3

P1

M2

P2

P3

BSC1

BSC2

BSC3

F1

F2

M4

BSC4

M6

P4

Pn

BSCn

M5

F3

Mn

F5

Fig. 3.

Fn

12 CHANNELS IN TOTAL — 45

10 CHANNELS FOR GSM — 46

48 — 5 CHANNELS FOR PCN

8 CHANNELS FOR NEW CALLS

4 CHANNELS FOR HAND OVERS

2 CHANNELS FOR RETRIES

50

52

54

Fig. 4